# FASCICULE DE BREVET EUROPEEN

(11) **EP 3 867 103 B1**
(45) Date de publication et mention de la délivrance du brevet: **12.04.2023**
(21) Numéro de dépôt: 19801940.8
(22) Date de dépôt: 30.09.2019
(51) Int. Cl.: B60R 19/24, B60Q 1/04, B60Q 1/00, B60R 19/50

(54) **VÉHICULE AUTOMOBILE COMPORTANT AU MOINS UN PROJECTEUR AVEC OU SANS GLACE DE PROTECTION**
KRAFTFAHRZEUG MIT MINDESTENS EINEM SCHEINWERFER MIT ODER OHNE SCHUTZLINSE
MOTOR VEHICLE COMPRISING AT LEAST ONE HEADLAMP WITH OR WITHOUT A PROTECTIVE LENS

(30) Priorité: 19.10.2018 FR 1871228
(43) Date de publication de la demande: 25.08.2021
(73) Titulaire: PSA Automobiles SA, 78300 Poissy (FR)
(72) Inventeur: ROYER, Guillaume, 91680 Bruyères Le Chatel (FR); PERON, Rodolphe, 95220 Herblay (FR); BOUDAN, Julien, 91210 Draveil (FR); MOUDNIB, Ahmed, 78440 Issou (FR)
(86) Numéro de dépôt international: PCT/FR2019/052298
(87) Numéro de publication internationale: WO 2020/079339

(56) Documents cités:
- WO-A1-2017/171676
- FR-A1- 2 871 432
- JP-A- 2002 029 343
- JP-A- 2004 322 910
- JP-A- 2005 271 758
- US-A1- 2010 032 971

## Description

L'invention se rapporte au domaine des systèmes d'éclairage et de signalisation des véhicules automobiles. L'invention concerne plus particulièrement véhicule dont le montage des projecteurs avant est simplifié, le véhicule étant compatible à la fois avec le montage de projecteurs sans glace de protection et avec le montage de projecteurs avec glace de protection.

On connaît des projecteurs pour véhicule automobile classiques, qui comportent un boîtier formant un réflecteur, à l'intérieur duquel est disposée une source lumineuse, le boîtier étant fermé par une glace extérieure de protection.

Les documents JP 2005 271758 A, US 2010/032971 A1, JP 2004 322910 A et JP 2002 029343 A décrivent des moyens de fixations connus pour phare de véhicule.

On connaît également des projecteurs pour véhicule automobile qui sont dépourvus de glace extérieure de couverture (ou glace de protection), de conception plus récente. De tels projecteurs comportent au moins un module d'éclairage, le module d'éclairage comportant une lentille montée sur un support et destinée à transmettre la lumière émise par une source lumineuse comportant par exemple une ou plusieurs diodes électroluminescentes. De tels projecteurs sont aujourd'hui généralement réservés aux modèles de gamme supérieure.

Il peut être souhaitable qu'un modèle de véhicule donné puisse être commercialisé dans plusieurs versions, certaines équipées de projecteurs sans glace, d'autres équipés de projecteurs avec glace.

La présente invention a pour but de simplifier l'assemblage d'un véhicule automobile compatible à la fois avec projecteurs sans glace et avec des projecteurs avec glace de protection.

A cet effet, l'invention concerne un véhicule automobile suivant la revendication 1 et un véhicule automobile suivant la revendication 2.

Ainsi, en prévoyant un élément d'interface commun à toutes les versions d'un véhicule, cet élément assurant l'interface entre le pare-chocs et les projecteurs que ceux-ci soient équipés ou dépourvus de glace de protection, on simplifie l'agencement et l'assemblage de ces différents composants.

Suivant l'invention, l'élément d'interface comporte deux lumières coopérant chacune avec l'un de deux premiers éléments d'indexation.

Suivant l'invention, l'élément d'interface comporte deux deuxièmes éléments d'indexation coopérant chacun avec un troisième élément d'indexation correspondant du pare-chocs.

Suivant l'invention, les éléments d'indexation de l'élément d'interface sont formés par les parois délimitant les lumières.

Dans une réalisation, l'élément d'interface comporte une patte de fixation pour la fixation d'un élément de carrosserie.

Dans une réalisation, l'élément d'interface est obtenu par moulage d'un matériau plastique, tel que de l'acrylonitrile styrène acrylate (ou ASA) ou du polypropylène.

Dans une réalisation, le véhicule comporte deux projecteurs avant et un élément d'interface par projecteur.

La présente invention sera mieux comprise à la lecture de la description détaillée qui suit, faite en référence aux dessins annexés, dans lesquels :
[Fig. 1] est une vue partielle en perspective de l'avant d'un véhicule automobile équipé d'un projecteur comportant deux modules d'éclairage sans de glace ;
[Fig. 2a] est une vue en perspective partielle de l'assemblage de l'avant du véhicule de la figure 1, lorsque celui-ci est équipé de projecteurs sans glace ;
[Fig. 2b] est une vue analogue à la figure 1 montrant plus particulièrement la configuration de l'élément d'interface ;
[Fig. 3] est une vue en perspective partielle de l'assemblage d'un véhicule identique à celui de la figure 1, lorsque celui-ci est équipé de projecteurs avant comportant une glace de protection.

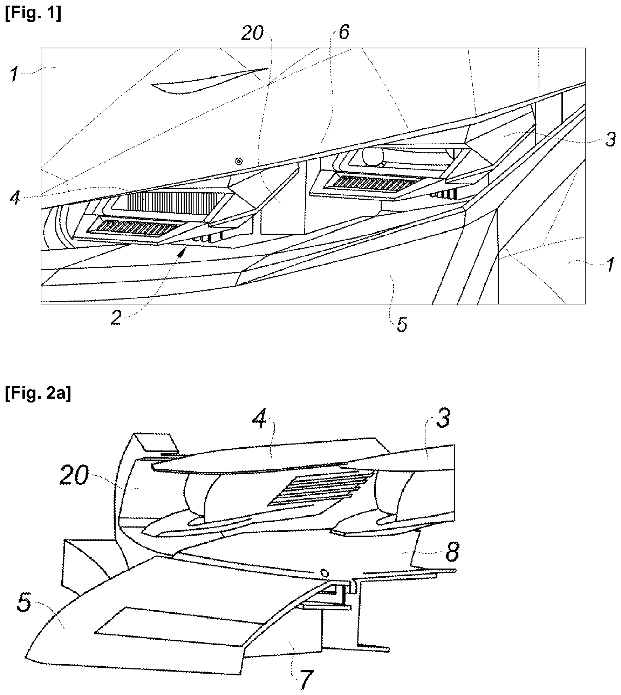

La figure 1 représente partiellement un véhicule 1 automobile conforme à l'invention, équipé dans l'exemple de la figure 1 de deux projecteurs sans glace (seul le projecteur 2 avant gauche étant représenté sur la vue partielle de la figure 1). Le projecteur 2 comporte dans l'exemple deux modules d'éclairage 3, 4 sans glace, c'est-à-dire dépourvus de glace de protection. Les deux modules d'éclairage 3, 4 sont solidaires d'un boîtier 20 du projecteur 2. Les deux modules d'éclairage 3, 4 sont disposés dans un espace délimité notamment par la partie supérieure du pare-chocs 5 avant et par un élément de carrosserie 6, ou prolongateur de capot 6, situé dans le prolongement du capot avant (cet élément de carrosserie étant couramment désigné par son appellation anglaise « *soft nose* »).

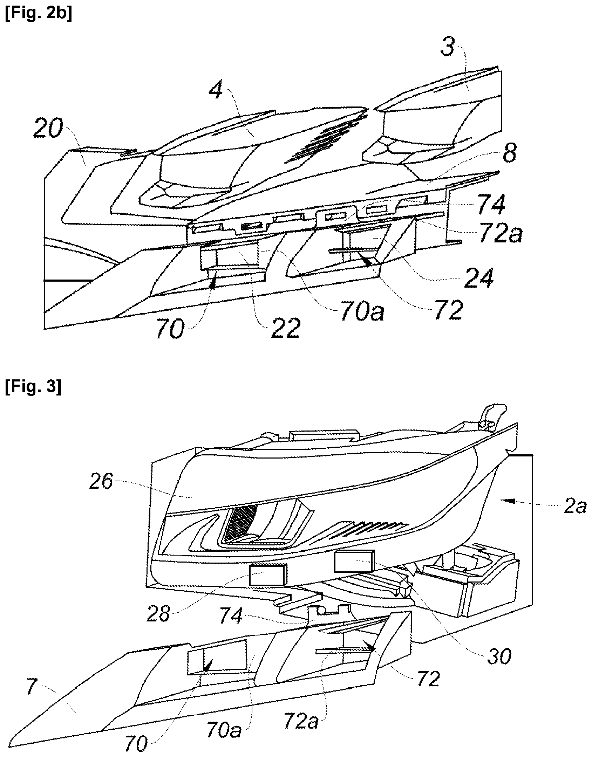

Les figures 2a et 2b sont des vues en perspective montrant partiellement le montage du projecteur 2. Conformément à l'invention, le pare-chocs 5 est fixé à un élément d'interface 7, cet élément d'interface étant compatible à la fois avec le montage de projecteurs sans glace et avec le montage de projecteurs avec glace. L'élément d'interface 7 est fixé au boîtier 20 du projecteur 2, au moyen de deux éléments d'indexage 22, 24. Chaque élément d'indexage 22, 24 forme une saillie venant s'insérer dans une lumière 70, 72 correspondante de l'élément d'interface 7. En outre, les lumières 70, 72 sont ménagées chacune dans un élément d'indexation 70a, 72a en saillie permettant de coopérer avec des éléments d'indexation de forme complémentaire du pare-chocs 5. Ainsi, l'élément d'interface 7 permet l'indexation et le montage à la fois du boîtier 20 et du pare-chocs 5. Comme illustré sur la figure 2a, l'élément d'interface est, une fois le véhicule assemblé, dissimulé par le pare-chocs 5. Dans l'exemple, l'élément d'interface 7 comporte une patte 74 permettant la fixation d'un élément de carrosserie 8 situé dans le prolongement du pare-chocs, sous les modules d'éclairage 3, 4. Alternativement, les éléments d'indexation 22, 24 pourraient être disposés sur un élément de carrosserie tel qu'une grille de calandre.

La figure 3 illustre le véhicule de la figure 1, lorsque celui-ci est équipé d'un projecteur 2a comportant une glace de protection 26. Afin de coopérer avec l'élément d'interface 7, le glace de protection 26 comporte, à proximité d'un bord inférieur, deux éléments d'indexation 28, 30 analogues à ceux de la figure 2b. Ainsi, l'élément d'interface 7 peut être fixé au projecteur 2a par coopération entre les éléments d'indexation 28, 30 et les lumières 70, 72 de l'élément d'interface 7. Le pare-chocs 5 (non représenté sur la figure) coopère de manière identique avec les éléments d'indexation 70a, 72a, que le projecteur soit de type sans glace ou avec glace.

L'invention permet donc de simplifier l'assemblage d'un véhicule automobile prévu pour être équipé de projecteurs avec ou sans glace en fonction des versions, au moyen d'une pièce unique assurant l'interface entre le projecteur et le pare-chocs.

## Revendications

1. Véhicule (1) automobile comportant un pare-chocs et au moins un projecteur (2, 2a) avant dépourvu de glace de protection, le véhicule (1) comportant un élément d'interface (7), l'élément d'interface étant **caractérisé en ce qu'**il comporte :
- deux lumières (70, 72) coopérant chacune avec l'un de deux premiers éléments d'indexation (22, 24, 28, 30) de forme complémentaire disposé sur un boîtier (20) du projecteur (2) ou sur un élément de carrosserie tel qu'une grille de calandre ;
- deux deuxièmes éléments d'indexation (70a, 72a) coopérant chacun avec un troisième élément d'indexation de forme complémentaire prévu sur le pare-chocs (5) venant recouvrir l'élément d'interface (7),
et dans lequel chacun des deuxièmes éléments d'indexation (70a, 72a) de l'élément d'interface (7) est formé par les parois délimitant une des lumières (70, 72).

2. Véhicule (1) automobile comportant un pare-chocs et au moins un projecteur (2, 2a) avant comportant une glace de protection, le véhicule (1) étant **caractérisé en ce qu'**il comporte :
un élément d'interface (7), l'élément d'interface comportant :
- deux lumières (70, 72) coopérant chacune avec l'un de deux premiers éléments d'indexation (22, 24, 28, 30) de forme complémentaire disposé sur la glace de protection (26) ;
- deux deuxièmes éléments d'indexation (70a, 72a) coopérant chacun avec un troisième élément d'indexation de forme complémentaire prévu sur un pare-chocs (5) venant recouvrir l'élément d'interface (7),
et dans lequel chacun des deuxièmes éléments d'indexation (70a, 72a) de l'élément d'interface (7) est formé par les parois délimitant une des lumières (70, 72).

3. Véhicule (1) selon l'une des revendications précédentes, dans lequel l'élément d'interface (7) comporte une patte de fixation (74) pour la fixation d'un élément de carrosserie (8).

4. Véhicule (1) selon l'une des revendications précédentes, dans lequel l'élément d'interface (7) est obtenu par moulage d'un matériau plastique, tel que de l'acrylonitrile styrène acrylate ou du polypropylène.

5. Véhicule (1) selon l'une des revendications précédentes, comportant deux projecteurs (2, 2a) avant et un élément d'interface (7) par projecteur (2, 2a).

## Patentansprüche

1. Kraftfahrzeug (1) mit einem Stoßfänger und mindestens einem Frontscheinwerfer (2, 2a) ohne Schutzglas, wobei das Fahrzeug (1) ein Schnittstellenelement (7) umfasst, wobei das Schnittstellenelement **dadurch gekennzeichnet ist, dass** es umfasst:
- zwei Öffnungen (70, 72), die jeweils mit einem von zwei ersten Indexierungselementen (22, 24, 28, 30) mit komplementärer Form zusammenwirken, die angeordnet sind
auf einem Gehäuse (20) des Scheinwerfers (2) oder auf einem Karosserieelement wie einem Kühlergrill ;
- zwei zweite Indexierungselemente (70a, 72a), die jeweils mit einem dritten Indexierungselement mit komplementärer Form zusammenwirken, das an der Stoßstange (5) vorgesehen ist, die das Schnittstellenelement (7) abdeckt, und
wobei jedes der zweiten Indizierungselemente (70a, 72a) des Schnittstellenelements (7) durch die Wände gebildet wird, die eines der Lumen (70, 72) begrenzen.

2. Kraftfahrzeug (1) mit einem Stoßfänger und mindestens einem Frontscheinwerfer (2, 2a) mit einer Schutzscheibe, wobei das Fahrzeug (1) **dadurch gekennzeichnet ist, dass** es ein Schnittstellenelement (7) umfasst, wobei das Schnittstellenelement umfasst:
- zwei Lumen (70, 72), die jeweils mit einem von zwei ersten Indexierungselementen (22, 24, 28, 30) mit komplementärer Form zusammenwirken, die angeordnet sind.
auf dem Schutzglas (26) ;
- zwei zweite Indexierelemente (70a, 72a), die jeweils mit einem dritten Indexierelement mit komplementärer Form zusammenwirken, das an einem Stoßfänger (5) vorgesehen ist, der das Schnittstellenelement (7) abdeckt, und
wobei jedes der zweiten Indizierungselemente (70a, 72a) des Schnittstellenelements (7) von den Wänden gebildet wird, die eines der Lumen (70, 72) begrenzen.

3. Fahrzeug (1) nach einem der vorhergehenden Ansprüche, wobei das Schnittstellenelement (7) eine Befestigungslasche (74) zum Befestigen eines Karosserieteils (8) aufweist.

4. Fahrzeug (1) nach einem der vorhergehenden Ansprüche, wobei das Schnittstellenelement (7) durch Formen eines Kunststoffmaterials, wie beispielsweise Acrylnitril-Styrol-Acrylat oder Polypropylen, erhalten wird.

5. Fahrzeug (1) nach einem der vorhergehenden Ansprüche, mit zwei Frontscheinwerfern (2, 2a) und einem Schnittstellenelement (7) pro Scheinwerfer (2, 2a).

## Claims

1. Motor vehicle (1) comprising a bumper and at least one front headlight (2, 2a) without a protective glass, the vehicle (1) comprising an interface element (7), the interface element being **characterised in that** it comprises:
- two slots (70, 72) each cooperating with one of two first indexing elements (22, 24, 28, 30) of complementary shape arranged
on a housing (20) of the headlamp (2) or on a bodywork element such as a grille;
- two second indexing elements (70a, 72a) each cooperating with a third indexing element of complementary shape provided on the bumper (5) covering the interface element (7), and
wherein each of the second indexing members (70a, 72a) of the interface member (7) is formed by the walls defining one of the slots (70, 72).

2. Motor vehicle (1) comprising a bumper and at least one front headlight (2, 2a) comprising a protective glass, the vehicle (1) being **characterized in that** it comprises an interface element (7), the interface element comprising:
- two slots (70, 72) each cooperating with one of two first indexing elements (22, 24, 28, 30) of complementary shape arranged
on the protective glass (26);
- two second indexing members (70a, 72a) each cooperating with a third indexing member of complementary shape provided on a bumper (5) covering the interface member (7), and
wherein each of the second indexing members (70a, 72a) of the interface member (7) is formed by the walls defining one of the slots (70, 72).

3. The vehicle (1) according to any of the preceding claims, wherein the interface member (7) includes a bracket (74) for attachment of a body member (8).

4. The vehicle (1) according to any of the preceding claims, wherein the interface element (7) is obtained by molding a plastic material, such as acrylonitrile styrene acrylate or polypropylene.

5. Vehicle (1) according to any of the preceding claims, comprising two front headlamps (2, 2a) and one interface element (7) per headlamp (2, 2a).
